# EUROPÄISCHE PATENTSCHRIFT

(11) **EP 0 726 401 B1**
(45) Veröffentlichungstag und Bekanntmachung des Hinweises auf die Patenterteilung: **04.03.1998**
(21) Anmeldenummer: 95120735.6
(22) Anmeldetag: 29.12.1995
(51) Int. Cl.: F16B 21/09, F16B 5/06

(54) **Verbindung zwischen einem Träger und einem Plattenelement**
Connection between a support and a panel
Liaison entre un support et un panneau

(30) Priorität: 13.02.1995 DE 19504692
(43) Veröffentlichungstag der Anmeldung: 14.08.1996
(73) Patentinhaber: TRW United-Carr GmbH & Co. KG, 67677 Enkenbach-Alsenborn (DE)
(72) Erfinder: Kraus, Willi, D-67269 Grünstadt (DE)
(74) Vertreter: Schieschke, Klaus, Dipl.-Ing.

(56) Entgegenhaltungen:
- EP-A- 0 432 855
- DE-C- 4 014 589

## Beschreibung

Die Erfindung bezieht sich auf eine Verbindung zwischen einem Träger, insbesondere einem Karosserieteil eines Kraftfahrzeugs, und einem Plattenelement, insbesondere einer Türverkleidung, mit einem an dem Plattenelement über einen Befestigungsbereich befestigbaren Oberteil und einem Eingriffsbereich für ein Halteteil, welches mit dem Träger verbindbar ist.

Es wurde bereits vorgeschlagen, ein Verbindungselement der eingangs genannten Art so auszugestalten, daß das Oberteil an der Innenseite einer Wandung Rastrippen aufweist, in welche am Kopfteil des Halteelements angeordnete Rastrippen einlagerbar sind (DE-A-4330 102). Bei dieser Konstruktion ist, insbesondere in Richtung der Längsachse ein Toleranzausgleich gegeben.

Weiterer Stand der Technik ist eine Verbindung mit einem an einem Plattenelement befestigbaren Oberteil, einem Mittelteil und einem Halteelement (DE-C-4014 589). Durch diese Konstruktion ist ein, insbesondere in der Kraftfahrzeugindustrie erforderliche Toleranzausgleich nur in der parallel zum Träger liegenden Ebene möglich.

Aufgabe der vorliegenden Erfindung ist es, eine Verbindung der eingangs genannten Art so auszugestalten, daß neben einer verbesserten Montagemöglichkeit eine weitere Erhöhung des Toleranzausgleichs erreicht wird, und zwar insbesondere zur Anbringung von Türverkleidungen auf dem Kraftfahrzeugsektor, welche erhöhten Temperaturbelastungen ausgesetzt sind.

Diese Aufgabe wird erfindungsgemäß dadurch gelöst, daß der Eingriffsbereich des Oberteils aus zwei übereinander angeordneten, durch einen Quersteg voneinander getrennten Taschen besteht und daß das Halteteil oberhalb eines mit dem Träger verbindbaren Befestigungsbereichs mit zwei im axialen Abstand voneinander angeordneten, quer zur Längsrichtung in die Taschen eingschiebbaren Flanschen versehen ist, wobei beide Flansche unterschiedliche Elastizität aufweisen.

Durch die Gesamtheit dieser Merkmale des erfindungsgemäßen Verbindungssystems ergibt sich der Vorteil einer einfachen Montage infolge des seitlichen Einschiebens des Halteteils in die Taschen, wobei durch besondere Gestaltung der Taschen und der Flansche eine weitere Verbesserung der Befestigung, insbesondere einer Türverkleidung an einem Karosserieteil eines Kraftfahrzeuges, auch unter Temperatureinfluß gegeben ist.

Der Befestigungsbereich kann als Anker- oder Zylinderfuß mit hinter einer Öffnung des Trägers einlagerbaren, elastischen Rastelementen ausgebildet sein. Oberhalb des Befestigungsbereichs kann sich eine umlaufende, elastische Dichtlippe befinden, an welcher über Verbindungshälse die Flansche anschließen. Hierbei kann der untere Flansch als starrer Teller ausgebildet sein, wohingegen der obere Flansch mit einem elastischen mittleren Bereich versehen ist. Die Elastizität des mittleren Bereichs kann beispielsweise über spiralförmig gewundene Arme geschaffen werden, welche mit einem äußeren Ring verbunden sind.

Vorteilhafte Weiterbildungen ergeben sich aus den Unteransprüchen.

Die Erfindung wird nachfolgend anhand eines in der Zeichnung dargestellten Ausführungsbeispiel näher beschrieben. In der Zeichnung zeigen:
- Fig. 1: eine Seitenansicht eines Halteteils,
- Fig. 2: eine Draufsicht auf das Halteteil nach Fig. 1,
- Fig. 3: eine perspektivische Ansicht auf das Halteteil,
- Fig. 4: eine Vorderansicht des Oberteils,
- Fig. 5: eine Seitenansicht des Oberteils nach Fig. 4,
- Fig. 6: einen Schnitt gemäß der Linie VI-VI in Fig. 4,
- Fig. 7: eine perspektivische Ansicht des Oberteils nach Fig. 4 und 5,
- Fig. 8: eine Unteransicht des Oberteils nach Fig. 4
- Fig. 9: die erfindungsgemäße Verbindung zwischen Oberteil und an einem Träger befestigten Halteteil in Seitenansicht.

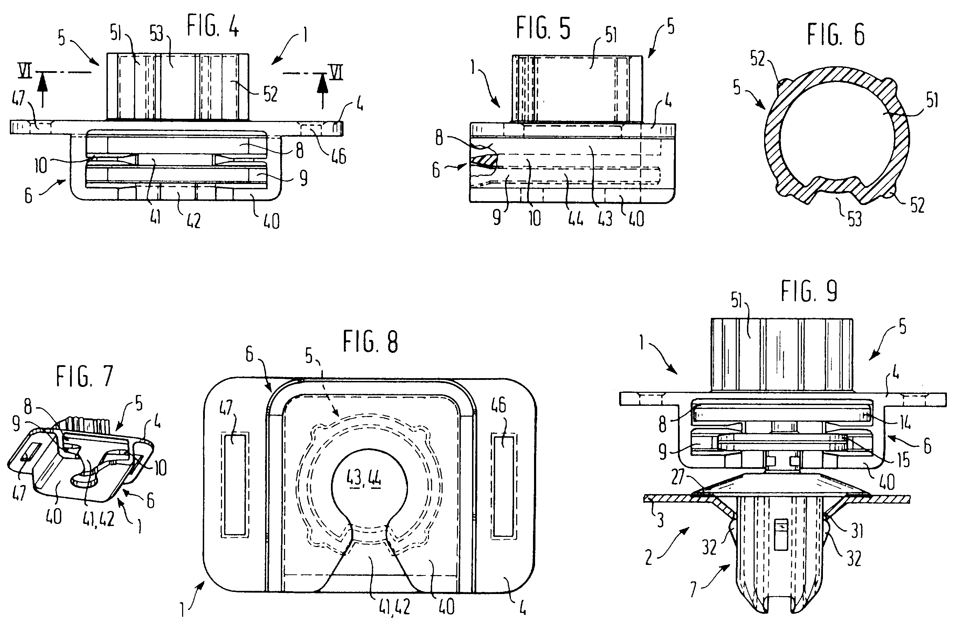

Fig. 9 stellt eine erfindungsgemäße Verbindung zwischen einem Träger 3, insbesondere eines Karosserieteils eines Kraftfahrzeuges, und einem nicht näher dargestellten Plattenelement, insbesondere einer Türverkleidung, dar.

Diese Verbindung besteht aus zwei Teilen, nämlich einem Oberteil 1 und einem Halteteil 2.

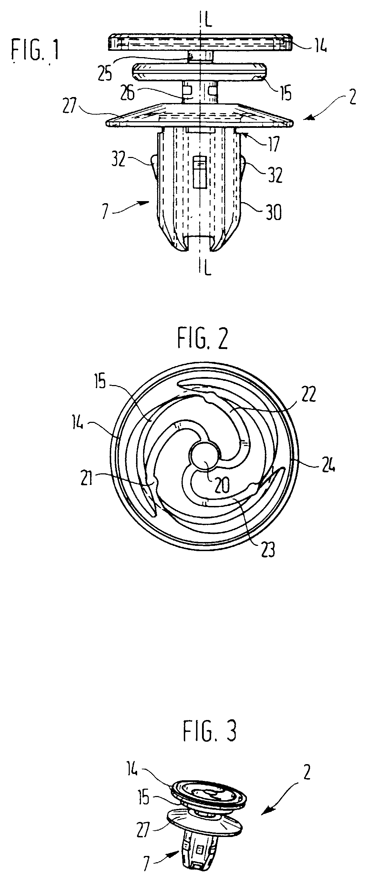

Fig. 1 bis 3 zeigen das Halteteil 2; Fig. 4 bis 8 stellen das Oberteil 1 dar.

Gemäß Fig. 1 besteht das Halteteil 2 im wesentlichen aus einem unteren Befestigungsbereich 7, einer darüber angeordneten elastischen Dichtlippe 27 sowie zwei Flanschen 14 und 15. Zwischen den beiden Flanschen 14 und 15 befindet sich ein Verbindungshals 25; zwischen dem Flansch 15 und der Dichtlippe 27 befindet sich ein Verbindungshals 26.

Der Befestigungsbereich 7 ist beispielsweise als Anker- oder Zylinderfuß 30 mit elastischen Rastelementen 32 ausgebildet. Zwischen dem oberen Bereich der elastischen Rastelemente 32 und der Unterseite der Dichtlippe 27 ist eine Lagerzone 17 vorgesehen. Infolge der Verbindungshälse 25 und 26 liegen die beiden Flansche 14 und 15 in Längsrichtung L-L im Abstand voneinander. Der untere Flansch 15 ist als starrer Teller ausgebildet, wohingegen der obere Flansch 14 nach Fig. 2 mit einem elastischen mittleren Bereich 20 versehen ist. Dieser elastische mittlere Bereich 20 ist über spiralförmig gewundene Arme 21, 22 und 23 mit einem äußeren Ring 24 verbunden.

Wie aus Fig. 1 erkennbar, weist der obere Flansch 14 einen größeren Durchmesser als der untere Flansch 15 auf. Der Verbindungshals 26 besitzt gleichfalls einen größeren Durchmesser als der Verbindungshals 25, wobei beide Hälse vorzugsweise zylindrisch ausgebildet sind.

Das in den Fig. 4 bis 8 dargestellte Oberteil 1 besteht im wesentlichen aus einem Befestigungsbereich 5 und einem Eingriffsbereich 6. Der Eingriffsbereich 6 weist nach Fig. 8 rechteckige Außenform auf und bildet zwei Taschen 8 und 9, welche durch einen Quersteg 10 voneinander getrennt sind. Die untere Tasche 9 wird nach Fig. 4 von einer Platte 40 begrenzt.

Der Quersteg 10 und die Platte 40 weisen, insbesondere nach Fig. 7 und 8, jeweils einen Einschubschlitz 41 und 42 für die Verbindungshälse 25 und 26 des in Fig. 1 dargestellten Halteteils 2 auf. Aus Fig. 8 geht darüberhinaus hervor, daß hinter den Einschubschlitzen 41 und 42 jeweils eine Öffnung 43 und 44 größeren Durchmessers vorhanden sind. Aus Fig. 5 ist ersichtlich, daß der Bereich der Einschubschlitze 41 und 42 konisch zulaufend ausgebildet ist, so daß sich bei seitlichem Einschieben des Halteteils 2 in das Oberteil 1 eine leichte Montage ergibt.

Zwischen dem Eingriffsbereich 6 und dem Befestigungsbereich 5 ist nach Fig. 4 und 8 eine Platte 4 angeordnet, welche gleichfalls Rechteckform aufweist und beidseitig des rechteckigen Eingriffsbereich 6 mit Längsausnehmungen 46 und 47 versehen ist. An diese rechteckige Platte 4 schließt der Befestigungsbereich 5 an, welcher nach Fig. 4 und 6 als Hohlzylinder 51 ausgebildet ist. Dieser Hohlzylinder besitzt am Außenumfang Längsrippen 52 sowie eine durchlaufende Aussparung 53.

Infolge der Einführungsschlitze 41 und 42 im Eingriffsbereich 6 des Oberteils 1 besteht die Möglichkeit, bei Montage der erfindungsgemäßen Verbindung das Halteteil 2 gemäß Fig. 9 so seitlich in das Oberteil 1 zu schieben, daß sich die Flansche 14 und 15 in den entsprechenden Taschen 8 und 9 einlagern. Aus Fig. 9 ist hierbei erkennbar, daß die obere Tasche 8 des Eingriffsbereichs 6 eine größere Höhe aufweisen kann als die Dicke des oberen Flansches 14 des Halteteils 2; die untere Tasche 9 besitzt etwa die Dicke des unteren Flansches 15. Damit ergibt sich infolge der Elastizität des oberen Flansches 14 und des Zwischenraums zwischen der Stirnfläche der Platte 40 und der Oberseite der Dichtlippe 27 insgesamt ein guter Toleranzausgleich in Längsrichtung.

Die erfindungsgemäße Verbindung, bestehend aus Oberteil 1 und Halteteil 2 kann gemäß Fig. 9 in eine Öffnung 31 des Trägers 3 eingesetzt werden, wobei diese Öffnung nach Fig. 9 beispielsweise eine napfartige Form besitzt. Hierbei legt sich die Dichtlippe 27 über die napfartige Form der Öffnung 31 des Trägers 3 und schützt diese damit vor Verschmutzung.

Nachdem gemäß Fig. 9 die Montage abgeschlossen ist, besteht nunmehr die Möglichkeit, an dem Befestigungsbereich 5, welcher als Hohlzylinder 51 mit den Längsrippen 52 und 53 versehen ist, ein Plattenelement, beispielsweise eine Türverkleidung eines Kraftfahrzeuges anzubringen. Diese Türverkleidung läßt sich beispielsweise mit Hilfe von in die Längsausnehmungen 46 und 47 der Platte 4 eingesetzten, nicht näher dargestellten Befestigungselementen zusätzlich sichern.

Durch die erfindungsgemäße Verbindung, bestehend aus besonders gestaltetem Oberteil 1 und Halteteil 2 ergibt sich eine Verbesserung des Toleranzausgleichs, insbesondere auf dem Kraftfahrzeugsektor und hier bei der Befestigung einer Türverkleidung an der Kraftfahrzeugkarosserie, wobei diese Verbindung auch bei höheren Wärmebeanspruchungen einwandfrei gewährleistet ist.

## Patentansprüche

1. Verbindung zwischen einem Träger (3), insbesondere einem Karosserieteil eines Kraftfahrzeugs und einem Plattenelement, insbesondere einer Türverkleidung, mit einem an dem Plattenelement über einen Befestigungsbereich (5) befestigbaren Oberteil (1) und einem Eingriffsbereich (6) für ein Halteteil (2), welches mit dem Träger (3) verbindbar ist,
**dadurch gekennzeichnet, daß**
der Eingriffsbereich (6) des Oberteils (1) aus zwei übereinander angeordneten, durch einen Quersteg (10) voneinander getrennten Taschen (8, 9) besteht und
daß das Halteteil (2) oberhalb eines mit dem Träger (3) verbindbaren Befestigungsbereich (7) mit zwei im axialen Abstand voneinander angeordneten, quer zur Längsrichtung (L-L) in die Taschen (8, 9) einschiebbaren Flanschen (14, 15) versehen ist, wobei beide Flansche (14, 15) unterschiedliche Elastizität besitzen.

2. Verbindung nach Anspruch 1,
**dadurch gekennzeichnet, daß**
der obere Flansch (14) mit einem elastischen mittleren Bereich (20) und der untere Flansch (15) als starrer Teller ausgebildet ist.

3. Verbindung nach Anspruch 2,
**dadurch gekennzeichnet, daß**
der mittlere Bereich (20) des oberen Flansches (14) über spiralförmig gewundene Arme (21, 22, 23) mit einem äußeren Ring (24) verbunden ist.

4. Verbindung nach Anspruch 2 und 3,
**dadurch gekennzeichnet, daß**
der obere Flansch (14) einen größeren Durchmesser als der untere Flansch (15) besitzt.

5. Verbindung nach den Ansprüchen 2 bis 4,
**dadurch gekennzeichnet, daß**
zwischen den Flanschen (14, 15) sowie zwischen dem unteren Flansch (15) und dem Befestigungsbereich (7) jeweils ein Verbindungshals (25, 26) vorgesehen ist.

6. Verbindung nach Anspruch 5,
**dadurch gekennzeichnet, daß**
die Verbindungshälse (25, 26) jeweils zylindrisch ausgebildet sind, wobei der Verbindungshals (25) zwischen den Flanschen (14, 15) einen kleineren Durchmesser aufweist als der untere Verbindungshals (26).

7. Verbindung nach Anspruch 6,
**dadurch gekennzeichnet, daß**
an den unterem Verbindungshals (26) eine umlaufende, elastische Dichtlippe (27) anschließt.

8. Verbindung nach Anspruch 7,
**dadurch gekennzeichnet, daß**
unterhalb der Dichtlippe (27) der Befestigungsbereich (7) angeordnet ist.

9. Verbindung nach Anspruch 8,
**dadurch gekennzeichnet, daß**
der Befestigungsbereich (7) als Anker- oder Zylinderfuß (30) mit hinter einer Öffnung (31) des Trägers (3) einlagerbaren, elastischen Rastelementen (32) ausgebildet ist.

10. Verbindung nach den Ansprüchen 5 bis 9,
**dadurch gekennzeichnet, daß**
der Quersteg (10) und eine die untere Tasche (9) des Eingriffsbereichs (6) des Oberteils (1) begrenzende Platte (40) jeweils mit einem Einschubschlitz (41, 42) für die Verbindungshälse (25, 26) des Halteteils (2) versehen sind und daß hinter den Einschubschlitzen (41, 42) jeweils eine Öffnung (43, 44) größeren Durchmessers angeordnet ist.

11. Verbindung nach Anspruch 10.
**dadurch gekennzeichnet, daß**
die Bereich der Einschubschlitze (41, 42) jeweils konisch zulaufend ausgebildet sind.

12. Verbindung nach Anspruch 10,
**dadurch gekennzeichnet, daß**
der Eingriffsbereich (6) rechteckige Außenform aufweist.

13. Verbindung nach den Ansprüchen 10 bis 12,
**dadurch gekennzeichnet, daß**
die obere Tasche (8) des Eingriffsbereichs (6) eine größere Höhe besitzt als die Dicke des oberen Flanschs (14) des Halteteils (2).

14. Verbindung nach den Ansprüchen 10 bis 13,
**dadurch gekennzeichnet, daß**
die untere Tasche (9) des Eingriffsbereichs (6) etwa der Dicke des unteren Flanschs (15) des Halteteils (2) entspricht.

15. Verbindung nach einem der vorhergehenden Ansprüche,
**dadurch gekennzeichnet, daß**
oberhalb des Eingriffsbereichs (6) des Oberteils (1) eine Platte (4) angeordnet ist, an welche der Befestigungsbereich (5) anschließt.

16. Verbindung nach Anspruch 12 und 15,
**dadurch gekennzeichnet, daß**
die Platte (4) Rechteckform besitzt und beidseitig des rechteckigen Eingriffbereichs (6) mit Längsausnehmungen (46, 47) versehen ist.

17. Verbindung nach den Ansprüchen 15 und 16,
**dadurch gekennzeichnet, daß**
der Befestigungsbereich (5) als Hohlzylinder (51) ausgebildet ist.

18. Verbindung nach Anspruch 17,
**dadurch gekennzeichnet, daß**
der Hohlzylinder (51) am Außenumfang mit Längsrippen (52) und einer durchlaufenden Aussparung (53) versehen ist.

## Claims

1. Connection between a carrier (3), in particular a bodywork part of a motor vehicle, and a panel element, in particular door panelling, having a top part (1), which can be fastened on the panel element via a fastening region (5), and an engagement region (6) for a retaining part (2) which can be connected to the carrier (3), characterized in that the engagement region (6) of the top part (1) comprises two pockets (8, 9) which are arranged one above the other and are separated from one another by a crosspiece (10), and in that the retaining part (2) is provided, above a fastening region (7) which can be connected to the carrier (3), with two axially spaced-apart flanges (14, 15) which can be pushed into the pockets (8, 9) transversely with respect to the longitudinal direction (L-L), the two flanges (14, 15) having different degrees of elasticity.

2. Connection according to Claim 1, characterized in that the top flange (14) is designed with an elastic central region (20), and the bottom flange (15) is designed as a rigid plate.

3. Connection according to Claim 2, characterized in that the central region (20) of the top flange (14) is connected to an outer ring (24) via helically wound arms (21, 22, 23).

4. Connection according to Claims 2 and 3, characterized in that the top flange (14) has a larger diameter than the bottom flange (15).

5. Connection according to Claims 2 to 4, characterized in that in each case one connecting neck (25, 26) is provided between the flanges (14, 15) and between the bottom flange (15) and the fastening region (7).

6. Connection according to Claim 5, characterized in that the connecting necks (25, 26) are each of cylindrical design, the connecting neck (25) between the flanges (14, 15) having a smaller diameter than the bottom connecting neck (26).

7. Connection according to Claim 6, characterized in that the bottom connecting neck (26) is adjoined by an encircling, elastic sealing lip (27).

8. Connection according to Claim 7, characterized in that the fastening region (7) is arranged beneath the sealing lip (27).

9. Connection according to Claim 8, characterized in that the fastening region (7) is designed as an anchor foot or cylinder foot (30) with elastic latching elements (32) which can be accommodated behind an opening (31) in the carrier (3).

10. Connection according to Claims 5 to 9, characterized in that the crosspiece (10) and a plate (40), which bounds the bottom pocket (9) of the engagement region (6) of the top part (1), are each provided with an insertion slot (41, 42) for the connecting necks (25, 26), and in that an opening (43, 44) of larger diameter is arranged in each case behind the insertion slots (41, 42).

11. Connection according to Claim 10, characterized in that the regions of the insertion slots (41, 42) are each designed in a conically tapering manner.

12. Connection according to Claim 10, characterized in that the engagement region (6) has a rectangular outer form.

13. Connection according to Claims 10 to 12, characterized in that the height of the top pocket (8) of the engagement region (6) is greater than the thickness of the top flange (14) of the retaining part (2).

14. Connection according to Claims 10 to 13, characterized in that the bottom pocket (9) of the engagement region (6) corresponds approximately to the thickness of the bottom flange (15) of the retaining part (2).

15. Connection according to one of the preceding claims, characterized in that a plate (4) is arranged above the engagement region (6) of the top part (1) and is adjoined by the fastening region (5).

16. Connection according to Claims 12 and 15, characterized in that the plate (4) is of rectangular form and is provided, on both sides of the rectangular engagement region (6), with longitudinal cutouts (46, 47).

17. Connection according to Claims 15 and 16, characterized in that the fastening region (5) is designed as a hollow cylinder (51).

18. Connection according to Claim 17, characterized in that the hollow cylinder (51) is provided on the outer circumference with longitudinal ribs (52) and a continuous recess (53).

## Revendications

1. Liaison entre un support (3), en particulier une partie de carrosserie d'un véhicule automobile et un panneau, en particulier un revêtement de portière, avec une partie supérieure (1) pouvant être fixée sur le panneau sur une zone de fixation (5) et une zone de prise (6) pour un élément de retenue pouvant être raccordée au support (3), caractérisée en ce que
la zone de prise (6) de la partie supérieure (1) consiste en deux poches superposées, séparées entre elles par une entretoise (10) et
la partie de retenue (2) est munie au-dessus d'une zone de fixation (7) pouvant être raccordée au support (3) de deux brides (14, 15) enfichables disposées à une distance axiale entre elles, transversalement au sens longitudinal (L-L) dans les poches (8, 9), les deux brides (14, 15) possédant une élasticité différente.

2. Liaison selon la revendication 1,
caractérisée en ce que
la bride supérieure (14) est formée avec une zone moyenne élastique (20) et la bride inférieure (15) se présente sous forme de dépression rigide.

3. Liaison selon la revendication 2,
caractérisée en ce que
la zone médiane (20) de la bride supérieure (14) est raccordée par des bras (21, 22, 23) torsadés en spirale à un anneau extérieur (24).

4. Liaison selon les revendications 2 et 3,
caractérisée en ce que
la bride supérieure (14) possède un plus grand diamètre que la bride inférieure (15).

5. Liaison selon les revendications 2 à 4,
caractérisée en ce qu'
entre les brides (14, 15) ainsi qu'entre la bride inférieure (15) et la zone de fixation (17) est respectivement prévu un collet de liaison (25, 26).

6. Liaison selon la revendication 5,
caractérisée en ce que
les collets de liaison (25, 26) sont chacun formés cylindriquement, le collet de liaison (25) entre les brides (14, 15) présentant un plus petit diamètre que le collet de liaison inférieur (26).

7. Liaison selon la revendication 6,
caractérisée en ce que
sur le collet de liaison inférieur (26) se raccorde une lèvre d'étanchéité élastique circulaire (27).

8. Liaison selon la revendication 7,
caractérisée en ce qu'
au-dessous de la lèvre d'étanchéité (27) est disposée la zone de fixation (7).

9. Liaison selon la revendication 8,
caractérisée en ce que
la zone de fixation (7) est formée sous forme de pied cylindrique ou pied d'ancrage (30) avec des éléments d'encliquetage élastiques (32) enfichables derrière une ouverture (31) du support (3).

10. Liaison selon les revendications 5 à 9,
caractérisée en ce que
l'entretoise transversale (10) et une plaque (40) limitrophe de la poche inférieure (9) de la zone de prise (6) de la partie supérieure (1) sont chaque fois munies d'une fente d'introduction (41, 42) pour les collets de liaison (25, 26) de la partie de retenue (2) et en ce que derrière les fentes d'introduction (41, 42) est chaque fois prévue une ouverture (43, 44) de plus grand diamètre.

11. Liaison selon la revendication 10,
caractérisée en ce que
les zones des fentes d'introduction (41, 42) sont chaque fois de conception conique allant en s'amenuisant.

12. Liaison selon la revendication 10,
caractérisée en ce que
la zone de prise (6) présente une forme extérieure rectangulaire.

13. Liaison selon les revendications 10 à 12,
caractérisée en ce que
la poche supérieure (8) de la zone de prise (6) possède une hauteur supérieure à l'épaisseur de la bride supérieure (14) de la partie de collet (2).

14. Liaison selon les revendications 10 à 13,
caractérisée en ce que
la poche inférieure (9) de la zone de prise (6) correspond sensiblement à l'épaisseur de la bride inférieure (15) de la partie de retenue (2).

15. Liaison selon l'une des revendications précédentes,
caractérisée en ce qu'
au-dessus de la zone de prise (6) de la partie supérieure (1) est disposée une plaque (4) à laquelle se raccorde la zone de fixation (5).

16. Liaison selon les revendications 12 et 15,
caractérisée en ce que
la plaque (4) présente une forme rectangulaire et est munie des deux côtés de la zone de prise rectangulaire (6) d'évidements longitudinaux (46, 47).

17. Liaison selon les revendications 15 et 16,
caractérisée en ce que
la zone de fixation (5) est de conception cylindrique creuse (51).

18. Liaison selon la revendication 17,
caractérisée en ce que
le cylindre creux (51) est muni sur la périphérie extérieure de nervures longitudinales (52) et d'un évidement traversant (53).
